(19) Europäisches Patentamt
European Patent Office
Office européen des brevets

(11) EP 1 172 871 A2

(12) **EUROPEAN PATENT APPLICATION**

(43) Date of publication:
**16.01.2002 Bulletin 2002/03**

(51) Int Cl.⁷: **H01M 8/00**

(21) Application number: **01830458.4**

(22) Date of filing: **10.07.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.07.2000 IT RM000375**

(71) Applicant: **Cancellieri, Franco**
**00141 Roma (IT)**

(72) Inventor: **Cancellieri, Franco**
**00141 Roma (IT)**

(74) Representative: **Iannone, Carlo Luigi et al**
**Ing. Barzanò & Zanardo Roma S.p.A. Via Piemonte, 26**
**00187 Roma (IT)**

(54) **Fuel cells with gaseous electrolyte**

(57) The invention concerns a fuel cell to generate electric energy from the electrolytic reaction of a fuel and oxygen, comprising at least a system comprised of an anode and a cathode, separated by an electrolyte that allows the passage of a ion flow, and of an outer circuit that allows the passage of an electron flow wherein electrolyte is a gas, that can be comprised of gaseous intermediate products of the catalytic combustion reaction of hydrocarbons.

The invention further concerns a battery directly obtainable by the assembling of a plurality of elementary cells of the above kind, and to an electric energy generation system obtained employing the same cell.

Fig. 1

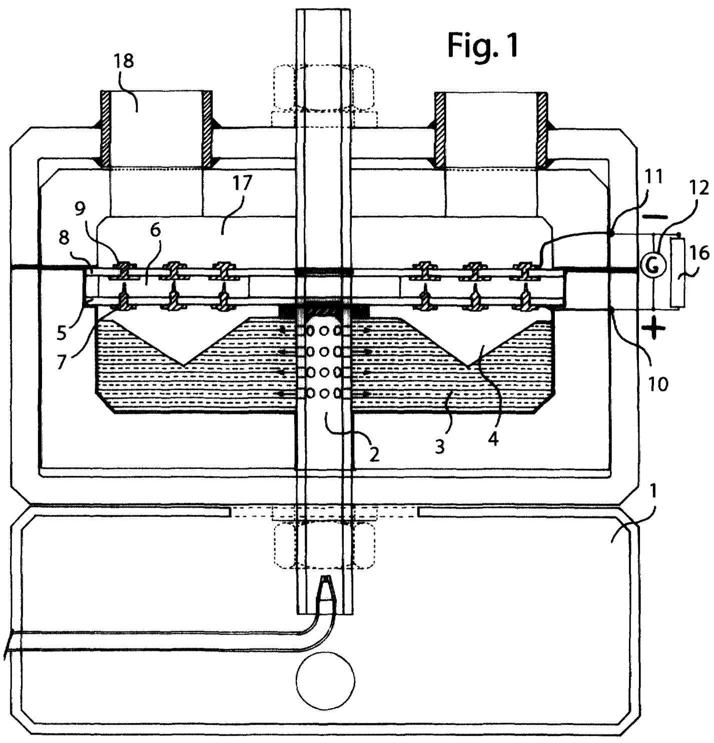


EP 1 172 871 A2

## Description

The present invention concerns a fuel cell with gaseous electrolyte.

More particularly, the invention relates to a fuel cell and to the batteries and electric energy generation systems obtained by the same, exploiting the gaseous intermediate products of the catalytic combustion reactions of hydrocarbons, or of the gas mixtures having features equivalent, as electrolyte.

At present, most energy consumed all over the world is obtained by the direct combustion of hydrocarbons, developing heat, said heat being used to generate mechanical energy and, in case it is wished to obtain electric energy, it is further converted into electricity.

Each one of the above mentioned passages involves a loss of energy, involving the reduction of the efficiency that can be obtained, calculated as power that can be effectively used with respect to the nominally available power.

The most disadvantageous transformation is the passage from thermal energy into mechanical energy according to Carnot cycle, due to the limitations according to the second principle of thermodynamic. Efficiency of this passage is the ratio between work provided externally and the absorbed heat. Thus, for the same heat absorbed, work must maximised. Said work is a function of the temperatures in correspondence of which the heat exchanges are carried out, according to the well known formula that can be written as follows:

$$L = \Delta H \frac{T_1 - T_2}{T_2} = \Delta H - \Delta H \frac{T_2}{T_1}$$

wherein $\Delta H$ is the enthalpy variation, while $T_1$ and $T_2$ (with $T_1 > T_2$) are absolute temperatures expressed as Kelvin degrees.

In order to improve the conversion efficiency, the maximum and minimum temperature values of the fluid making the thermodynamic cycle should be distanced: but the first temperature is limited by material resistance limits, while the second temperature is never lower than room temperature, being possible a 100% efficiency only if the theoretical limit of $T_2$ = 0°K is reached.

Practically, efficiencies of internal combustion machines are very low.

Much more efficient are systems for the direct transformation of chemical energy (being it possible to transform electric energy into mechanical power with very high efficiencies).

In this light, many studies have been made during last years on fuel cells and on batteries employing the same.

In 1839, British physician William R. Grove demonstrated that the electrochemical combination of hydrogen and oxygen generates electricity. Subsequent studies (Wilhelm Ostwald, 1894) concentrated their attention on the electrochemical reaction between carbon with oxygen.

Particularly, a fuel cell works as a battery, with the difference due to the fact that electrochemical reactions, generating electric energy, are due to the fuel introduced from outward, being in this way possible to deliver infinite energy until the feeding of the fuel is prosecuted.

A fuel cell is essentially comprised of two electrodes, anode and cathode, between which an electrolyte is interposed, allowing the migration of ions. The oxidation reaction of the fuel gas occurs on the anode, with the production of electrons, flowing along the outer circuit, while the reduction reaction of the comburent gas occurs on the cathode, using the same electrons coming from the outer electric circuit. Electrolyte is the means through which the passage of the ion flow occurs. According to the nature of the electrolyte, migrating ions can be positive ions (directed toward the cathode) or negative ions (directed toward the anode). After having passed through the electrolyte, ions react with the relevant counter-ions to create the final product, with the generation of energy.

Since for each cell not satisfactory voltage values are obtained, "elementary" cells are connected in series to obtain a battery with the wished voltage.

Fuel fed to the anode can be hydrogen, carbon (and in this case they are called direct fuel cells) or their compounds, along with other elements, such as, for example, carbon oxide, alcohol, methane or other hydrocarbons, (in this case they are called indirect fuel cells); furthermore, fuel can be solid, liquid or gaseous.

Usually, oxygen, or more simply air, is fed to the cathode.

In the exemplificative case of fuel comprised only of carbon, the global reaction producing energy is:

$$C + O_2 \rightarrow CO_2 + energia$$

Evaluating the details of this reaction, it can be demonstrated that, to make possible the formation of $CO_2$, each carbon atom must first free four electrons by the formation of a carbon ion; oxygen atoms catch these four electrons and consequently assume a negative charge.

Ions having an opposite charge are thus combined to form $CO_2$ thus, it can be said that an electrons transfer occurs from $C$ to $O_2$.

The principle of the fuel cell is essentially the separation in the space of the two partial ionisation reactions; in this way, transfer of electrons can not directly occur from atom to atom (or from molecule to molecule), but only through a suitable conductor; passing through the user circuit, electrons must produce a work and only after, once reached the calculation, can reduce the oxygen in a suitable way according to the following reaction:

$$O_2 + 4e \rightarrow 2O^{2-}$$

Negative oxygen ions thus obtained diffuse through the electrolyte and arrive to the anode where they combine with the carbon ions to form $CO_2$.

Reaction kinetic can be generically improved increasing the temperature, since their speed increases with the same according to the Arrhenius Law, which has the following formula:

$$\log k = H - \frac{A}{4{,}574T}$$

that takes into consideration the impacts probability.

However, the problem of the fuel cells can not be solved only basing on thermodynamic reactions.

In fact, the determining feature to improve the kinetic of a reaction is the control of the electrochemical phenomenons occurring to the electrodes and within the electrolyte.

To this end, research is presently concentrating on the nature of the electrolyte and of the catalysts of the reactions occurring on the electrodes.

As to the electrolyte, different kind of solutions are presently studied or manufactured, working with different kind of fuel, with different average temperatures and that allow to obtain different efficiencies.

On the basis of the type of electrolyte, it is possible to distinguish phosphoric acid fuel cells (PAFC), molten carbonate fuel cells (MCFC), solid oxide fuel cells (SOFC), alkaline fuel cells (AFC), and solid polymer fuel cells (SPFC). Apart from the last case, they are always liquid electrolytes.

Some of these solutions are presently used for energy production systems. Efficiencies usually reachable by these plants are of about 40 - 50%.

AFC, SPFC, PAFC fuel cells work at low temperatures and consequently have minor technological problems and allow the use of structural materials not particularly valuable. On the contrary, they require noble metal based catalysts and have worse efficiencies than the MCFC and SOFC cells. The latter work at very higher temperatures (600 - 1000°C) and have higher technological difficulties, but they have a higher flexibility with respect to the fuel (being of the indirect kind). Furthermore, high temperature of the residual heat can allow the integration in combined cycles, thus allowing to reach total efficiencies of 60 - 65%.

Fuel cell and battery subject matter of the present invention are completely new and inventive, since for the first time they employ a gaseous electrolyte, obtained by the catalytic combustion of hydrocarbons, allowing power density and efficiencies remarkably higher with respect to the systems presently available.

Particularly, the present invention is extremely advantageous since uses for its working gases usually manufactured in the traditional industrial systems such as refineries and power generation systems.

It is therefore specific object of the present invention a fuel cell to generate electric energy from the electrolytic reaction of a fuel with oxygen, comprising at least a system comprised of an anode and a cathode separated by an electrolyte that allows the passage of a ion flow and of an outer circuit that allows the passage of an electron flow, characterised in that the electrolyte is a gas.

Preferably, according to the invention, said gaseous electrolyte can be comprised of gaseous intermediate products of the catalytic combustion reaction of hydrocarbons.

Particularly, said hydrocarbons can be methane, propane or other gaseous hydrocarbons.

Furthermore, according to the invention, catalyst of said catalytic combustion reaction is comprised of different ceramic materials, such as porous or dust, or wire shaped, wire woven and other ceramic materials commonly used for similar reactions; said catalyst particularly comprising clay ($3Al_2O_3 \cdot 2SiO_2$) and albite feldspar($NaAlSi_3O_8$) in different types, porous or dust solid form, wire shaped, wire woven.

Still according to the invention, oxygen reacting to the cathode is provided by an air feeding as comburent gas, while fuel reacting at the anode comprises a fraction of the gaseous intermediate products of said catalytic combustion reaction, and can further comprise hydrogen, carbon, or their compounds, along with or with other elements, such as steam, carbon oxide, alcohol, methane and other hydrocarbons.

Always according to the invention, cathode is comprised of iron, while anode is comprised of nickel, but electrodes can also be comprised of nickel, platinum, and other catalysts usually employed for the same use.

Further, between anode and cathode a voltage continua G can be applied, generating an excitation electrical field.

It is a second object of the present invention a fuel cell comprised of a series of elementary cells as described in the above.

Finally, it is further object of the present invention and electrical energy generator comprising at least;

- a pre-mixer of the gaseous hydrocarbon and oxygen or air;
- a filtering chamber and a subsequent catalytic combustion chamber for said gaseous mixture;
- a fuel battery according to the present invention;
- a chamber to collect burnt gases and to exhaust the same in the atmosphere.

The present invention will be now described, for illustrative but not limitative purposes, with particular reference to some illustrative examples.

Example 1

Catalytic combustion for the formation of gaseous electrolyte.

Gaseous electrolyte subject matter of the present invention can be obtained from the catalytic combustion of hydrocarbons. For exemplificative, but not limitative, purposes, in this and in the following examples the use of methane will be taken into consideration.

To catalyse the combustion allowing the formation of gaseous electrolyte, different kind of ceramic material, such as solid, porous or dusty, wire shaped, wire woven, materials, can be employed, or other materials normally used for this kind of reactions.

Catalysts have acid nature, in other words they are electron acceptors.

In the following description, the formation phenomenon of the gas employed as electrolyte will be completely analysed, without stopping on the single intermediate reactions.

To represent the radical groups, their chemical formula has the symbol (·), while ionic groups will be individuated by the mark of the electric charge characterising the same. It must be remembered that the difference between a radical and a ion essentially is in the fact that, even having both valence free, the first one is electrically neutral, while the second one has a positive or negative charge, i.e. it has one or more electrons, less or exceeding.

It is deemed that the combustion of hydrocarbons passes through the formation of CO, oxidised by ozone and activated oxygen.

Particularly, it is deemed that, due to collisions, methane loses one hydrogen atom and captures an oxygen molecule, thus forming $CH_3O_2\cdot$ tending to transform in an aldheyde group, of the formaldehyde type, $CH_2O$, or ketonic, further oxidised causing the breaking of the chain.

Due to subsequent bonds and oxidations, a single intermediate compound is obtained, paracetic acid ($CH_3COOH$), further oxidisable to produce free radicals, water, carbon oxide and *HCHO*.

Developing the continuous reaction in a free environment, the presence of some stable intermediate products is noted, such as *CO*, $H_2$, $H_2CO$, that then completely oxidise.

Using air as comburent gas, air can be mixed with fuel and make flowing, for example, through a clay catalyst ($3Al_2O_3 \cdot 2SiO_2$) and albite feldspar($NaAlSi_3O_8$), in the dusty solid form or in the form of thin woven wires.

It is deemed that, once reached the temperature of about 350°C, for the combustion reaction, a contact ionisation occurs with the consequent breakage of chains of paracetic acid, with the formation of ions according to the following reactions:

$$CH_3CH = CH_2 \xrightarrow{H^+} CH_3 - {}^-CH - CH_3 \qquad (I)$$

$$CH_3CH = CH_2 \xrightarrow{H^+} CH_3 - CH_2 - CH_2^+ \qquad (II)$$

By reaction (I), an enthalpy variation $\Delta H = -181 kcal/mol$ occurs, while by reaction (II) an enthalpy variation $\Delta H = -165 kcal/mol$ occurs.

From hydrocarbons, molecules of carbon oxide and hydrogen atoms derive, due to subsequent reaction; hydrogen reacts with oxygen, developing 144,000 *kJ/kg* (corresponding to 288,000 *kJ/kmol*).

Provided that as a whole a hydrogen combustion reaction occurs, at most the temperature of 1400 *K* is reached, if all the ions produced remain in the combustion reaction. In case only a part of the above ions is suitably displaced toward the anode, as it occurs in the present case, (e.g. by an induced electric field), the support to the thermic combustion reaction would be maintained in an amount sufficient to their formation and direct electric power would be obtained.

In order to evaluate the above partial combustion with ion formation, it is necessary to analyse its stoichiometry, i.e. knowing the relative amount of oxygen (or of air) sufficient as reagents.

Particularly, for the catalytic combustion, it will be not possible to work with an excess of air, since the strong percentage of Nitrogen composing the same hinders the hydrogen reactions.

The mass of stoichiometric air can be determined with the following formula:

$$M_a = \frac{1}{1{,}296}\left[0{,}024(H_2 + CO) + 0{,}096CH_4 + 0{,}048\sum\left(m + \frac{n}{4}\right)C_mH_n - 0{,}48O_2\right]$$

wherein by m and n the numbers of carbon atoms and hydrogen are indicated intervening in the hydrocarbon molecule $C_mH_n$ and Σ is a summation comprising all the present hydrocarbons in the fuel.

Particularly, the amount of air necessary for the reaction, in volume, can be calculated by the relation:

$$V_a = \frac{M_a}{\rho_a}$$

wherein $V_a$ indicates amount of air in $m^3$, $M_a$ its mass in *kg,* calculated according to the preceding formula, and $\rho_a$ its volume mass in $kg/m^3$ at the introduction conditions.

Value of $\rho_a$ under the different conditions of temperature and pressure, can be calculated with a good approximation employing the following relation, that refers to the standard conditions:

$$\rho_a = \rho_0 \frac{p}{p_0} \frac{T_0}{T}$$

wherein $\rho_0$=1,296 $kg/m^3$, $p_0$=1 *bar,* $T_0$=273 *K, p* and *T are* respectively inlet pressure and temperature.

Employing methane as fuel, theoretic air necessary for the combustion is, in the ratio in weight with respect to the fuel, 17.45 (*kg*/*kg*) and, in the ratio in volume, 10.54 ($m^3/m^3$). Methane concentration within air corresponds to 6.8% in volume.

Inflammability limits for methane in air, in volume, are 5% and 15%.

For the subject combustion, it is therefore suitable to provide the stoichiometric amount of air, gradually reducing up to the upper limit for the methane concentration, to promote the catalysis effect and the formation of carbocations.

To reach the above object, it can be used a suitable air and comburent mixer used.

Example 2.

Fuel cell with gaseous electrolyte, wherein fuel and electrolyte are both methane gas.

Main scheme of the exemplificative generator is shown in figure 1.

Air and methane, respectively acting as comburent and fuel gas, are premixed within a Venturi mixer 1, such as Bunsen burner with the air intake that can be shut.

Mixture passes into the filtering chamber 2 and, through a ceramic catalyst 3, into a subsequent combustion chamber 4, wherein, after having been ignited by a spark or a pilot flame, the catalytic combustion of methane occurs, mainly with the formation of $CO_2$, ions and radicals that, as a whole, comprise the gaseous electrolyte.

Different forms of clay ($3Al_2O_3 \cdot 2SiO_2$) and albite feldspar($NaAlSi_3O_8$)can be used as catalyst, such as porous solid or dusty, wire shaped, woven wires. The methane reaction occurs on the catalyst, in a condition of low air.

On the surface of said catalyst, as a consequence of the partial catalytic reaction, a temperature of about 1000 K is reached, with a remarkable irradiation of thermal energy with spectral bands in the infrared field: from 8000 to $400 \cdot 10^3$ *Å*.

Gaseous electrolyte so generated on the limit surface between catalyst 3 and combustion chamber 4 passes,

through a holed septum 5, comprised of a not conductive material, within the production cell 6.

Production cell is comprised of the holed septum 5, provided with different iron cathodes 7, series/parallel coupled each other, and of another holed septum 8, comprised of not conductive material, provided with different nickel anodes 9, series/parallel coupled each other.

Holed septums 5 and 8 are comprised of ceramic material to withstand to the high temperatures of the catalytic combustion.

Cathodes 5 are connected to a positive terminal 10. Anodes 8 are connected to a negative terminal 11.

To easy and to orient the reactions within the production cell, it can be applied a continuous voltage G, indicated in figure 1 by the reference number 12, at the ends of the positive and negative terminals, generating an excitation electric field.

To improve the reactions, it can be introduced air on cathodes 13 (figure 1A) and steam on anodes 14 (figure 1B).

Repeating scheme of the cell for many times, a fuel battery is obtained able to provide wished voltage and continuous current.

Particularly, considering to use methane gas as fuel and air as comburent, reactions occurring on the cathode are the following:

$$O_2 + 4e \rightarrow 2O^{2-}$$

$$2O^{2-} + 2CO_2 \rightarrow 2CO_3^{2-}$$

i.e., as a whole

$$O_2 + 2CO_2 + 4e \rightarrow 2CO_3^{2-}$$

wherein electrons are those produced on the anode, oxygen is that of air and $CO_2$ is a product of the preceding combustion.

Ions $CO_3^{2-}$ produced on the cathode are displaced toward anode by the auxiliary excitation electric field, where they react with the instable ions $CH_2^+$ e $H^+$, produced by the preceding catalytic combustion, yielding electrons and creating carbon dioxide, according to the following reactions:

$$CO_3^{2-} + CH_2^+ \rightarrow CO_2^{2-} + H_2O$$

$$CO_3^{2-} + 2H^+ \rightarrow CO2 + H_2O$$

$$CO_2^{2-} \rightarrow CO_2 + 4e$$

i.e., as a whole,

$$2CO_3^{2-} + CH_2^+ + 2H^- \rightarrow 2CO_2 + 2H_2O + 4e$$

Electrons produced on the anode passes to the cathode by the outer loading 16, or, in absence of this load, determine the potential difference between electrodes.

In presence of pure methane (in excess) and water, self-generated or appositely introduced at the anode, the reaction can be improved according to the following scheme:

$$CH_4 + H_2O \rightarrow CO + 3H_2$$

$$CO + H_2O \rightarrow CO_2 + H_2$$

i.e. as a whole,

$$CH_4 + 2H_2O \rightarrow CO_2 + 4H_2$$

and

$$2H_2 \rightarrow 4H^+ + 4e$$

$$2CO_3^{2-} + 4H^+ \rightarrow 2CO_2 + 2H_2O$$

i.e. as a whole

$$2H_2 + 2CO_3^{2-} \rightarrow 2CO_2 + 2H_2O + 4e$$

Burnt gases, along with the residual of the production cells, are collected within the chamber 17 and vented in the atmosphere by the suitable conducts 18.

Example 3.

Scheme of the elementary cell of figure 1 can be repeated many times, with the cell connected each other in series, to obtain the wished voltage and continuos current.

For each pair of anode - cathode, the following general features are obtained:

| | |
|---|---|
| Fuel | $CH_4$, $C_3H_8$, other hydrocarbons |
| Working temperature | 800-1100 K |
| Working pressure | 1 $kg/cm^2$ |
| Pair voltage | 0,8-1,2 V |
| Current density | 100-300 $mA/cm^2$ |

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Fuel cell to generate electric energy from the electrolytic reaction of a fuel with oxygen, comprising at least a system comprised of an anode and a cathode separated by an electrolyte that allows the passage of a ion flow and of an outer circuit that allows the passage of an electron flow, **characterised in that** the electrolyte is a gas.

2. Fuel cell according to claim 1, **characterised in that** said gaseous electrolyte is comprised of gaseous intermediate products of the catalytic combustion reaction of hydrocarbons.

3. Fuel cell according to claim 2, **characterised in that** said hydrocarbons can be methane, propane or other gaseous hydrocarbons.

4. Fuel cell according to claim 2 or 3, **characterised in that** catalyst of said catalytic combustion reaction is comprised of different ceramic materials, such as porous or dust, or wire shaped, wire woven and other ceramic materials commonly used for similar reactions.

5. Fuel cell according to one of the preceding claims 2 - 4, **characterised in that** said catalyst comprises clay ($3Al_2O_3 \cdot 2SiO_2$) and albite feldspar($NaAlSi_3O_8$) in different types, porous or dust solid form, wire shaped, wire

woven.

**6.** Fuel cell according to one of the preceding claims, **characterised in that** oxygen reacting to the cathode is provided by an air feeding as comburent gas.

**7.** Fuel cell according to one of the preceding claims, **characterised in that** fuel reacting at the anode comprises a fraction of the gaseous intermediate products of said catalytic combustion reaction.

**8.** Fuel cell according to one of the preceding claims 1 - 6, **characterised in that** said fuel reacting at the anode comprises hydrogen, carbon, or their compounds, along with or with other elements, such as steam, carbon oxide, alcohol, methane and other hydrocarbons.

**9.** Fuel cell according to one of the preceding claims 1 - 7, **characterised in that** cathode is comprised of iron, while anode is comprised of nickel.

**10.** Fuel cell according to one of the preceding claims 1 - 6 and 8, **characterised in that** electrodes are be comprised of nickel, platinum, and other catalysts usually employed for the same use.

**11.** Fuel cell according to one of the preceding claims, **characterised in that** between anode and cathode a voltage continua G can be applied, said voltage generating an excitation electrical field.

**12.** Fuel battery **characterised in that** it is comprised of at least an elementary cell as claimed in each one of the preceding claims.

**13.** Electrical energy generator, **characterised in that** it comprises:

- a pre-mixer of the gaseous hydrocarbon and oxygen or air;
- a filtering chamber and a subsequent catalytic combustion chamber for said gaseous mixture;
- at least a fuel cell according to each one of the preceding claims;
- a chamber to collect burnt gases, and
- at least an exhaust conduct to exhaust the burnt gases in the atmosphere.

**14.** Electrical energy generator according to claim 13, **characterised in that** it further comprises:

- a holed septum comprised of not conductive material, placed between the combustion chamber and the fuel cell;
- a second holed septum comprised of not conductive material, placed between the fuel cell and the chamber for collecting the burnt gases, and
- a system for the direct introduction of air on the cathode and of a fuel on the anode.

Fig. 1

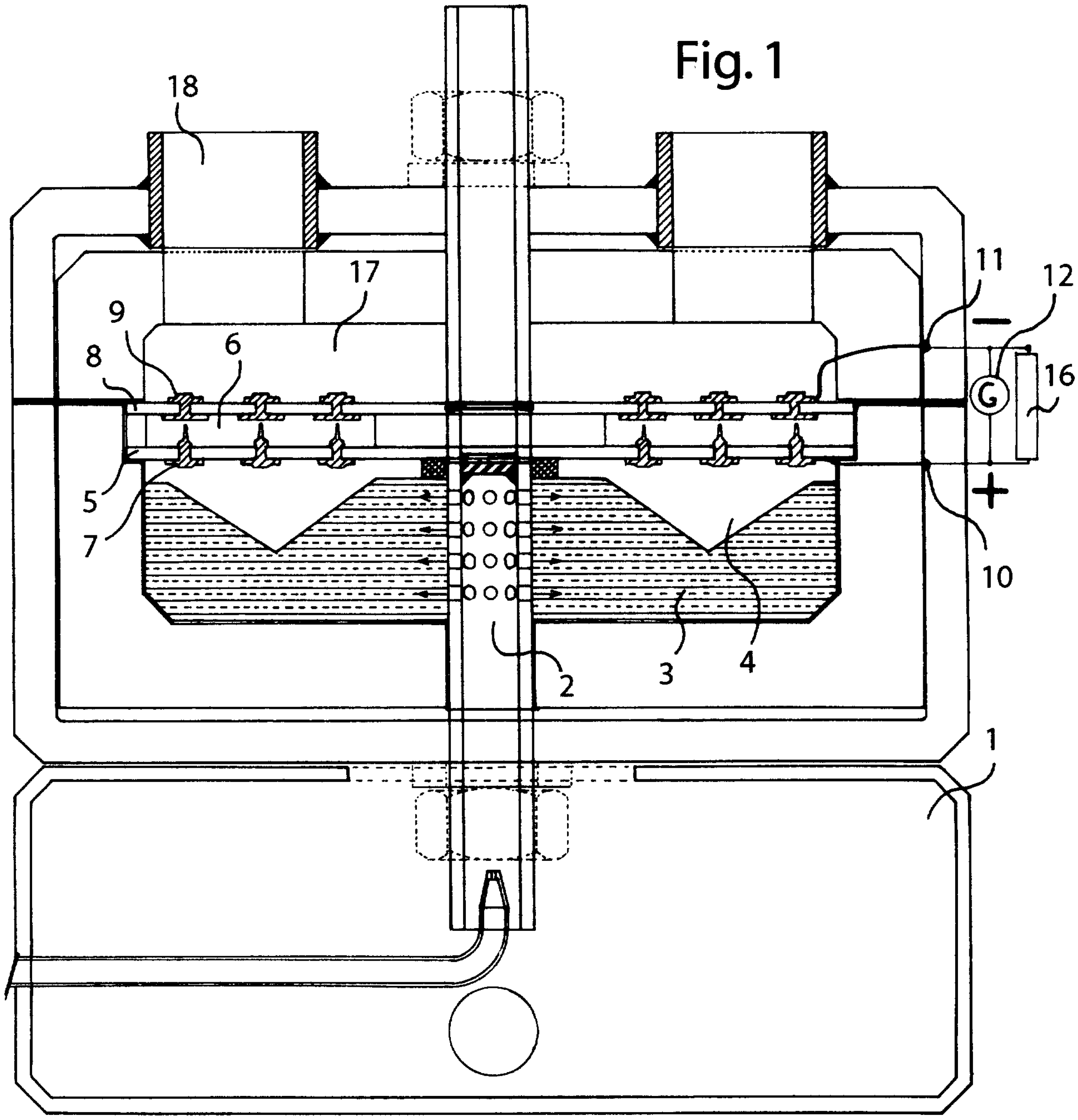


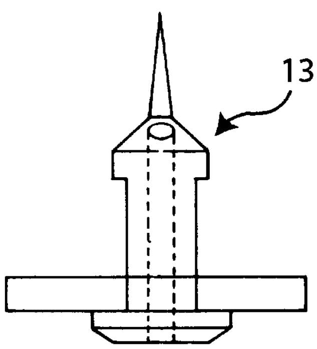


Fig. 1a

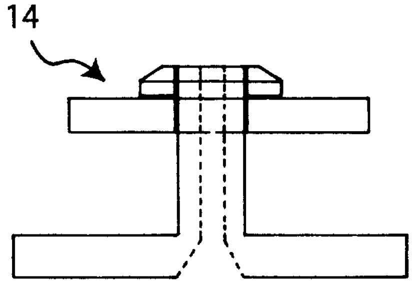


Fig. 1b